Europäisches Patentamt

European Patent Office

Office européen des brevets

(19)

(11) Numéro de publication : **0 018 298**
**B1**

(12) **FASCICULE DE BREVET EUROPÉEN**

(45) Date de publication du fascicule du brevet :
08.02.84

(51) Int. Cl.³ : **G 06 F   7/48**

(21) Numéro de dépôt : **80400545.2**

(22) Date de dépôt : **22.04.80**

(54) *Procédé pour obtenir un résultat de calcul numérique en représentation en virgule flottante avec le nombre de chiffres significatifs exacts dans ce résultat et dispositif de calcul numérique mettant en œuvre ce procédé.*

(30) Priorité : **23.04.79 FR 7910244**

(43) Date de publication de la demande :
**29.10.80 Bulletin 80/22**

(45) Mention de la délivrance du brevet :
**08.02.84 Bulletin 84/06**

(84) Etats contractants désignés :
**AT BE CH DE FR GB IT LI LU NL SE**

(56) Documents cités :
**IEEE TRANSACTIONS ON COMPUTERS, vol. C-26, juillet 1977, no. 7, New York US D.J. KUCK et al.: "Analysis of rounding methods in floating-point arithmetic", pages 643-650**
**IEEE TRANSACTIONS ON COMPUTERS, vol. C-22, no. 6, juin 1973 New York US J.M. YOHE: "Roundings in floating-point arithmetic", pages 577-586**
**PROCEEDINGS OF THE SPRING JOINT COMPUTER CONFERENCE; AFIPS CONFERENCE PROCEEDINGS, vol. 38, 1971 Montvale, New Jersey US H.S. BRIGHT et al.: "A Software system for tracing numerical significance during computer program execution", pages 387-392**

(73) Titulaire : **ANVAR Agence Nationale de Valorisation de la Recherche**
**13, rue Madeleine Michelis**
**F-92522 Neuilly-sur-Seine (FR)**

(72) Inventeur : **Vignes, Jean**
**13, rue George Sand**
**F-92500 Reuil-Malmalson (FR)**
Inventeur : **Ung, Vincent**
**39 ter, avenue des Piliers**
**F-94210 La Varenne (FR)**

(74) Mandataire : **Joly, Jean Jacques et al**
**CABINET BEAU DE LOMENIE 55, rue d'Amsterdam**
**F-75008 Paris (FR)**

## Procédé pour obtenir un résultat de calcul numérique en représentation en virgule flottante avec le nombre de chiffres significatifs exacts dans ce résultat et dispositif de calcul numérique mettant en œuvre ce procédé

La présente invention concerne un procédé pour obtenir un résultat final d'un calcul qui est effectué sur des données numériques en représentation en virgule flottante en base b dans un dispositif de calcul numérique à partir d'au moins une donnée numérique initiale et qui comprend une ou plusieurs opérations arithmétiques devant être effectuées pour aboutir au résultat final.

L'invention concerne aussi un dispositif mettant en œuvre ce procédé et constituant un processeur de calcul à précision contrôlée.

La représentation des nombres dans un calculateur se fait à l'aide d'un nombre fini de chiffres significatifs, ce qui entraîne nécessairement une perte de précision. Lorsque les calculateurs travaillent en arithmétique avec troncature, la valeur du nombre utilisée est, en valeur absolue, toujours la valeur par défaut. Lorsque l'on travaille en arithmétique avec arrondi, les valeurs des nombres utilisées sont des valeurs par excès ou par défaut.

Usuellement, lorsque l'on obtient le résultat d'un calcul effectué en arithmétique en virgule flottante, l'on ne connaît pas le nombre de chiffres ou digits significatifs exacts dans ce résultat. Si l'on a recours à un calcul d'erreur utilisant une majorante de l'erreur pour chaque opération arithmétique du calcul effectué, la valeur de l'erreur calculée sur le résultat final est beaucoup plus grande que sa valeur réelle. Ces inconvénients sont exposés dans un article de MM. H. S. Bright et al. intitulé « A software system for tracing numerical significance during computer program execution » et paru dans la publication « Proceedings of the Spring Joint Computer Conference », AFIPS Conference Proceedings, vol. 38, 1971, pp. 387-392. La solution proposée dans cet article consiste à associer à chaque nombre un index indiquant le nombre le plus probable de digits valables et à déterminer, pour chaque opération élémentaire du calcul effectué, le nombre de digits significatifs dans le résultat de cette opération. Cette détermination est effectuée en exécutant un algorithme qui prend en compte la nature de l'opération, la valeur de chaque opérande, le nombre probable de digits valables dans chaque opérande, la précision de la machine pour l'opération à réaliser, le type d'arrondi, et la précision inhérente au programme.

Dans l'article de J. Michael Yohe intitulé « Roundings in Floating-Point Arithmetic » et paru dans la publication I.E.E.E. Transactions on Computers », Vol. C-22, No 6, June 1973, pp. 577-586, sont décrits différents circuits et algorithmes d'arrondi pour obtenir une valeur exacte des résultats d'opérations arithmétiques sur des données numériques en virgule flottante. En particulier, il est décrit l'utilisation d'un digit de troncature pour indiquer l'existence ou la non-existence de digits non nuls à droite de la donnée numérique et l'utilisation de digits de garde, du côté des digits de poids le plus faible, afin d'éviter une perte d'information en cas de décalages à droite.

Suivant un autre procédé, qui fait l'objet de la demande de brevet EP-A-18 238 déposée le 30 janvier 1980 (publiée le 29 août 1980) au nom de la demanderesse, on détermine le nombre de chiffres significatifs exacts dans un résultat d'un calcul en procédant comme suit. A chaque nombre, on associe une information de troncature ayant un premier ou un second état selon que la valeur réelle du nombre est tronquée ou non dans sa représentation numérique utilisée. On effectue plusieurs fois le calcul avec modification dans au moins une procédure indépendamment des autres, la modification consistant, au cours de chaque opération élémentaire, à ajouter éventuellement et aléatoirement un bit de poids le plus faible à la mantisse de chaque nombre dont l'information de troncature est dans le premier état. Enfin, on élabore la valeur moyenne et l'écart-type des différents résultats du calcul obtenus par les différentes procédures pour déterminer le nombre de chiffres significatifs exacts dans un de ces résultats.

La présente invention a pour but de fournir un procédé permettant également de déterminer le nombre de chiffres significatifs exacts dans un résultat de calcul mais ne nécessitant ni le calcul du nombre de digits significatifs à chaque opération élémentaire du calcul, ni l'exécution d'algorithmes particuliers d'arrondi, ni le déroulement de plusieurs procédures avec processus de modification pour conduire à plusieurs résultats du même calcul.

Ce but est atteint au moyen du procédé défini dans la revendication 1 annexée.

Par donnée initiale, on entend ici une donnée n'ayant subi aucun traitement arithmétique. On pourra associer à chaque donnée utilisée dans le calcul une information binaire ayant un premier ou un second état selon que cette donnée est une donnée initiale ou a déjà subi au moins un traitement arithmétique.

Lorsque la valeur réelle de la donnée initiale ne peut pas être exactement transcrite dans le format n + 1 utilisé pour le calcul, on pourra prendre soit la valeur arrondie de la mantisse, soit la valeur tronquée.

Dans le premier cas, l'information d'erreur associée à la mantisse de donnée initiale sera déterminée en évaluant l'erreur accomplie au cours de l'opération d'arrondi dans la mesure des capacités de calcul disponibles. Ainsi, par exemple, si la donnée initiale se présente avec un format n + 1 + n', on prendra pour évaluer l'information d'erreur, le contenu des n' plus basses positions, ou le complément de ce contenu suivant le sens de l'arrondi. Dans la mesure où n' dépasse les capacités de registre disponibles, on se contentera d'une valeur tronquée de n'.

La mantisse de résultat d'une opération arithmétique effectuée sur des données initiales arrondies est appelée ici mantisse de valeur moyenne, bien qu'il ne s'agisse pas d'une valeur moyenne au sens normal du mot, par analogie avec le cas de la troncature envisagé plus loin. L'information d'erreur associée à la mantisse de valeur moyenne de résultat est la variance ou l'écart-type calculé sur la base des informations d'erreur associées aux données initiales arrondies.

Selon un mode préféré de mise en œuvre de l'invention, au stade de l'acquisition d'une donnée initiale, on prendra la valeur tronquée de sa mantisse lorsque cette mantisse ne peut pas être transcrite dans le format utilisé par le calcul.

On associe alors à chaque donnée initiale une information de troncature (T) ayant un premier ou un second état selon que la mantisse de cette donnée est tronquée ou non. Lorsque l'information de troncature (T) associée à une donnée initiale est dans son premier état, on associe à cette donnée, d'une part, une mantisse de valeur moyenne de format $n + 1$ obtenue en complétant la mantisse de donnée initiale tronquée en format n par introduction de la valeur $1/2 \cdot b$ dans la $(n + 1)^e$ position, et, d'autre part, une information d'erreur constituée par la variance $1/4 \cdot b^{-2n}$ ou l'écart-type $1/2 \cdot b^{-n}$.

De la sorte, la valeur moyenne de mantisse de résultat d'opération arithmétique effectuée sur des données initiales tronquées est égale à la valeur moyenne des résultats pouvant être obtenus pour toutes les combinaisons possibles des valeurs par excès et par défaut des mantisses tronquées de ces données initiales. Quant à l'information d'erreur associée à la mantisse de valeur moyenne de résultat, elle est la variance ou l'écart-type calculé sur la base des informations d'erreur associées à ces données initiales.

Dans le reste de la description, on considérera toujours le cas où les données initiales sont tronquées lorsqu'elles ne peuvent être exactement transcrites dans le format utilisé.

Chaque traitement d'une mantisse de donnée est accompagné par un traitement de l'information d'erreur associée.

Ainsi, pour chaque opération de normalisation (décalage à gauche) ou de dénormalisation (décalage à droite) d'une mantisse de valeur moyenne, on décrémente ou incrémente l'exposant de cette valeur moyenne d'un nombre de pas fonction du nombre de décalages de la mantisse et on décrémente ou incrémente l'exposant de l'information d'erreur associée d'un nombre double de pas, lorsque l'information d'erreur est la variance ou du même nombre de pas lorsque l'information d'erreur est l'écart-type.

Par ailleurs, pour chaque troncature ou arrondi d'une mantisse de valeur moyenne, on met à jour l'information d'erreur associée en utilisant, en cas de troncature, la partie tronquée de la mantisse et, en cas d'arrondi, ladite partie tronquée ou son complément selon le sens de l'arrondi.

Dans un ordinateur classique, on ne traite généralement pas l'information qui est perdue par suite de troncature ou d'arrondi. On ne peut donc pas y implanter directement le procédé conforme à l'invention.

Aussi, l'invention concerne encore un dispositif de calcul pouvant mettre en œuvre le procédé conforme à l'invention, dispositif du type comportant au moins une unité de calcul, au moins un registre d'exposant d'opérande et un registre de mantisse d'opérande, une mémoire locale et un organe de contrôle pour émettre des signaux commandant l'exécution d'opérations élémentaires en fonction d'instructions délivrées par une mémoire de commande et relatives aux opérations arithmétiques d'un calcul à effectuer.

Une telle structure d'un dispositif de calcul est celle des dispositifs microprogrammés dont la technique est bien connue.

L'invention a pour but de compléter un dispositif de ce type pour le rendre apte à l'exécution du procédé conforme à l'invention, tel que défini plus haut, et obtenir ainsi un processeur de calcul à précision contrôlée.

Ce but est atteint, conformément à l'invention, par un dispositif tel que caractérisé dans la revendication 7 annexée.

Pour le calcul des valeurs moyennes, des informations d'erreur et du nombre de chiffres significatifs, on pourra utiliser des moyens de calcul distincts ou au moins en partie confondus.

Ainsi, une unité de calcul principale étant affectée au calcul à effectuer sur les exposants et mantisses de valeurs moyennes, on pourra utiliser les ressources de cette unité de calcul pour les calculs à effectuer sur les exposants et mantisses des informations d'erreur, ou bien on pourra prévoir une unité de calcul annexe indépendante pour effectuer ces derniers calculs. Quant au calcul du nombre de chiffres significatifs exacts, il pourra être effectué au moyen des ressources de l'unité de calcul principale ou annexe, ou bien être effectué au moyen d'une unité de calcul particulière indépendante. Dans tous les cas, une caractéristique essentielle du dispositif de calcul conforme à l'invention est la présence d'un organe de contrôle pour commander conjointement les calculs relatifs à la valeur moyenne et ceux relatifs à l'information d'erreur, calculs pouvant être effectués en parallèle de façon quasiment synchrone ou devant être effectués séquentiellement selon l'architecture retenue pour le dispositif de calcul.

Le dispositif de calcul comporte au moins un registre de mantisse de résultat de préférence en double longueur, c'est-à-dire à $2n + 2$ positions. La partie haute du registre ($n + 1$ positions de plus fort poids) contient la valeur qui sera conservée pour la suite du calcul ou pour la détermination du nombre de chiffres significatifs exacts. La partie basse du registre (les $n + 1$ positions de plus faible poids) est avantageusement utilisée pour la mise à jour de l'information d'erreur associée à la mantisse du résultat prélevée dans la partie haute du registre.

Pour réaliser cette mise à jour, on peut prévoir des moyens reliés à la partie basse du registre pour, en cas de troncature, ajouter le carré de la partie tronquée à la variance ou à l'écart-type au carré.

Selon une autre particularité du dispositif conforme à l'invention, la position de poids le plus faible de la partie basse du registre de mantisse de résultat est rebouclée sur elle-même. Ainsi, en cas de dénormalisation d'une mantisse de donnée, cette donnée ne risque pas d'être complètement perdue, notamment pour la mise à jour de l'information d'erreur, en raison d'un grand nombre de pas de décalage à droite.

Dans ce qui précède, on a envisagé le cas où la mantisse de résultat disponible dans le registre double longueur est mise au format par troncature. A titre de variante, la mise à format pourra être effectuée par arrondi. Dans ce dernier cas, on réalise la mise à jour de l'information d'erreur associée en y ajoutant le carré du contenu de la partie basse du registre ou de son complément par rapport à la base, l'information d'erreur étant représentée par la variance ou l'écart-type au carré.

L'invention est exposée ci-après plus en détail à l'aide de dessins représentant seulement un mode d'exécution, sur les dessins :

la figure 1 est une vue générale très schématique d'un dispositif de calcul conforme à l'invention,

les figures 2 à 5 sont des vues plus détaillées de différents éléments du dispositif représenté par la figure 1,

la figure 6 est une vue de détail illustrant une partie d'un dispositif de calcul conforme à l'invention travaillant en représentation binaire codée décimale, et

les figures 7A-7B et 8 sont des organigrammes d'opérations réalisées conformément à l'invention, respectivement une addition et une multiplication.

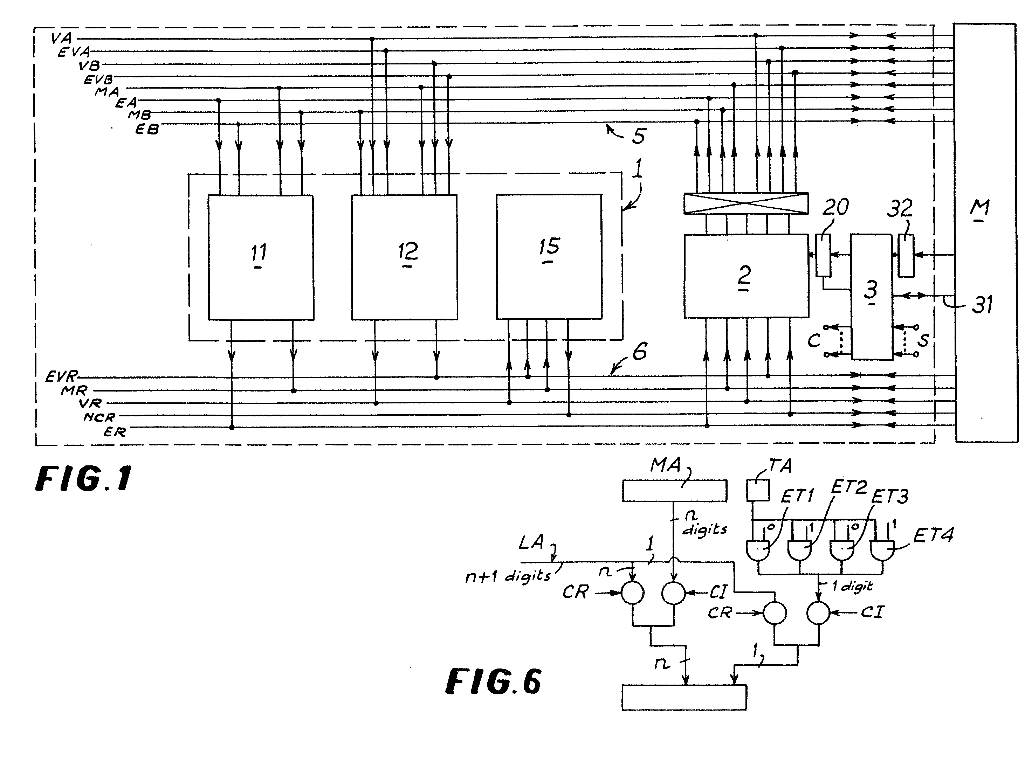

Le dispositif de calcul illustré par la figure 1 comporte un ensemble de calcul 1, une mémoire locale de travail 2 et un organe de contrôle 3. Ce dispositif de calcul est relié à une mémoire centrale ou à un processeur de commande extérieur schématisé en M.

Les opérandes sont transmis à l'ensemble de calcul 1 par des lignes de données 5 tandis que les résultats des calculs effectués par l'ensemble 1 sont disponibles sur des lignes de données 6.

L'organe de contrôle 3 est relié au processeur M par une liaison entrée sortie 31 et un registre 32. Le processeur M délivre à l'organe de contrôle 3 des instructions relatives aux opérations arithmétiques à effectuer pour un calcul déterminé. Ces instructions sont stockées séquentiellement dans le registre 32 et sont lues par l'organe de contrôle 3 au fur et à mesure du déroulement des opérations.

Pour chaque instruction reçue correspondant à une opération arithmétique à effectuer, l'organe de contrôle 3 fournit des signaux de commande C suivant le microprogramme sélectionné par ladite instruction dans l'organe de contrôle 3 et suivant des signaux S élaborés à différents niveaux de l'ensemble de calcul 1.

L'organe de contrôle 3 est relié à un registre d'adresse 20 associé à la mémoire de travail 2 pour commander l'écriture ou la lecture d'une donnée à une adresse déterminée de cette mémoire.

La mémoire 2 a son entrée reliée, d'une part, aux lignes de données 6 pour le stockage éventuel, à titre de donnée, de résultats intermédiaires fournis par l'ensemble de calcul et, d'autre part, au processeur M, pour le stockage de données nouvelles.

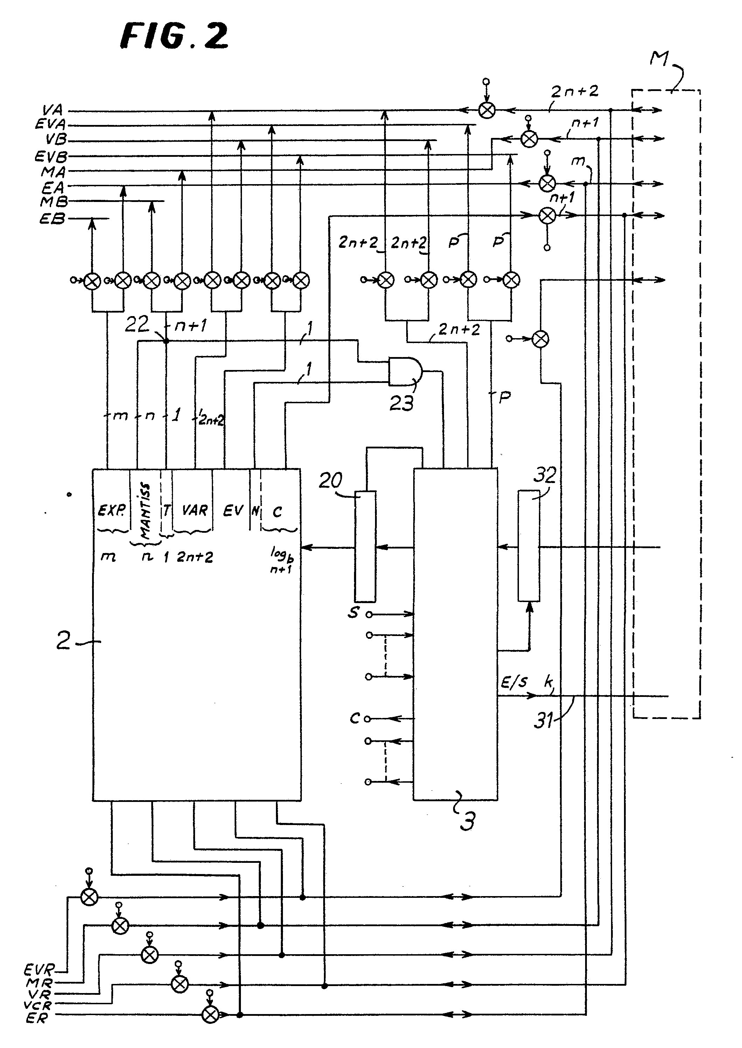

La sortie de la mémoire 2 est reliée aux lignes de données 5. Celles-ci sont également reliées aux lignes de données 6 et au processeur M, pour le transfert direct à l'entrée de l'ensemble de calcul 1 soit d'un résultat intermédiaire fourni par cet ensemble de calcul, soit d'une nouvelle donnée (figure 2).

Le dispositif de calcul travaillant sur des nombres en représentation en virgule flottante, l'ensemble de calcul 1 contient les opérateurs nécessaires pour effectuer les opérations élémentaires sur les mantisses et exposants sous la commande de l'organe de contrôle 3.

Un dispositif de calcul tel que décrit ci-dessus est du type de ceux mettant en œuvre les techniques connues de microprogrammation.

Ce dispositif de calcul se distingue de l'art antérieur en ce qu'il comporte des moyens spécifiques destinés à la détermination du nombre de chiffres significatifs exacts dans le résultat d'un calcul effectué par le dispositif-même.

Lorsque l'on travaille en arithmétique avec troncature (ou avec arrondi), on commet, pour chaque donnée qui ne peut pas exactement être représentée dans le format utilisé, une erreur égale à la valeur de la partie tronquée de la mantisse (ou, éventuellement, de son complément lorsque l'on travaille avec arrondi).

Dans le cas d'un calcul effectué sur des données tronquées (ou arrondies), il existe un ensemble de valeurs de résultats tous aussi représentatifs les uns que les autres des résultats exacts. Ces valeurs de résultats sont celles qui peuvent être obtenues en combinant de toutes les façons possibles les valeurs par excès et par défaut des données.

A partir de deux données initiales tronquées A et B de mantisse MA et MB de longueur n en base b en représentation en virgule flottante, un ensemble de résultats possibles pour une opération $\otimes$ comprend les résultats R1 à R4 obtenus pour toutes les combinaisons possibles des valeurs arrondies par excès et par défaut des mantisses des données, c'est-à-dire : $R1 = MA \otimes MB$ ; $R2 = (MA + b^{-n}) \otimes MB$ ; $R3 = MA \otimes (MB + b^{-n})$, et $R4 = (MA + b^{-n}) \otimes (MB + b^{-n})$.

On peut définir une valeur moyenne de mantisse de résultat MR égale à la valeur moyenne des mantisses des différents résultats et une information d'erreur associée (variance ou écart-type) représentée en virgule flottante avec mantisse VR et exposant EVR. Lorsque ce résultat est réutilisé comme donnée, les quantités MR, VR et EVR sont utilisées pour le calcul de la valeur moyenne et de l'information d'erreur de la mantisse du nouveau résultat.

En fin de calcul, on dispose du résultat final sous forme de la valeur moyenne MR de la mantisse, de son exposant ER et de l'information d'erreur (VR, EVR) de sa mantisse. On peut alors déterminer le nombre C de chiffres significatifs dans MR par la formule suivante :

$$b^{-C'} = ((VR, EVR) 1/2)/MR$$

(en numérotation à base b), C étant la valeur entière arrondie de C' et (VR, EVR) la variance.

Conformément à l'invention, le dispositif de calcul est muni de moyens permettant d'effectuer non pas seulement le calcul du résultat de chaque opération mais, d'une part, le calcul de la valeur moyenne de la mantisse du résultat et, d'autre part, le calcul de l'information d'erreur associée à cette valeur moyenne. En outre, des moyens sont prévus pour déterminer le nombre de chiffres significatifs dans le résultat final. Enfin, d'autres moyens sont prévus pour transformer chaque mantisse de donnée initiale tronquée en un couple valeur moyenne-information d'erreur.

Dans toute la description qui va suivre, l'information d'erreur associée à une mantisse de donnée ou de résultat est la variance.

Un mode particulier de réalisation d'un dispositif conforme à l'invention travaillant sur des nombres en numération binaire sera maintenant décrit en détail en référence aux figures 1 à 5. Dans d'autres modes de réalisation, la base de numération pourra prendre une autre valeur, par exemple 10 ou 16.

Chaque donnée A ou B est représentée en virgule flottante avec un exposant EA, EB de longueur m et une mantisse MA, MB de longueur n.

On adjoint à chaque donnée initiale une information de troncature T ayant un premier état (par exemple 1) lorsque la mantisse de la donnée est tronquée dans sa représentation en format n et un second état (par exemple 0) lorsque la donnée n'est pas tronquée.

On adjoint également à chaque donnée une information N ayant un premier état (par exemple 1) lorsque cette donnée est nouvelle, c'est-à-dire n'a subi aucune opération préalable au cours du calcul, et un second état (par exemple 0) lorsque cette donnée n'est pas nouvelle.

A chaque donnée A, B est associée la variance relative à sa mantisse, variance représentée en virgule flottante par sa mantisse VA, VB et son exposant EVA, EVB.

Une donnée (par exemple A) est donc caractérisée par les éléments suivants :

| EA | MA | T | VA | EVA | N |
|----|----|---|----|----|---|

Les exposants EA et EVA peuvent être en représentation dite « biaisée », ou en complément à un ou deux (en représentation binaire), ou en complément à neuf ou dix (en représentation décimale), ou encore en « valeur absolue + signe ». La mantisse VA est toujours positive. La mantisse MA peut être représentée en complément à un ou à deux ou en « valeur absolue + signe ».

Lorsqu'une donnée est une donnée initiale (N = 1), sa mantisse est transformée en mantisse de valeur moyenne à n + 1 positions et une variance lui est associée. Cette opération est réalisée comme suit :

Si la donnée introduite dans la mémoire 2 est tronquée (T = 1) on ajoute à sa mantisse de format n un bit « 1 » du côté des poids faibles (soit $2^{-(n+1)}$) pour obtenir une mantisse de format n + 1 représentant la valeur moyenne entre la valeur par excès et la valeur par défaut de la mantisse initiale en format n. Par contre, si la donnée initiale n'est pas tronquée (T = 0), on ajoute un bit « 0 » dans la (n + 1)$^{ème}$ position. Pratiquement, la mise au format n + 1 est réalisée simplement en adjoignant l'information binaire T à la mantisse de la donnée initiale à la sortie de la mémoire 2 (voir jonction 22 sur la figure 2). Cette sortie est reliée aux deux lignes, parmi les lignes de données 5, affectées aux mantisses MA, MB tandis que l'exposant de format m de la donnée est disponible sur la sortie de la mémoire 2 reliée aux deux lignes de données affectées aux exposants EA, EB.

Simultanément, on associe, à la donnée, lorsqu'elle est nouvelle, une variance nulle lorsque la donnée initiale n'est pas tronquée (N = 1, T = 0) et une valeur égale à $2^{-(2n+2)}$ lorsque la donnée initiale est tronquée (N = 1, T = 1). La condition N et T = 1 est détectée par une porte 23, ce qui autorise l'élaboration par l'organe de contrôle 3 d'une valeur $2^{-(2n+2)}$ sur sa sortie reliée aux deux lignes, parmi les lignes de données 5, affectées aux mantisses VA, VB tandis que l'exposant de format p est disponible sur la sortie de l'organe de contrôle reliée aux deux lignes affectées aux exposants EVA, EVB.

Les données, une fois mises au format et associées à une variance (nulle ou non) sont transmises à l'ensemble de calcul.

L'ensemble de calcul 1 comporte une unité de calcul 11 pour le calcul des espérances mathématiques ou valeurs moyennes de résultats, une unité de calcul 12 pour le calcul des variances associées aux valeurs moyennes de mantisses et une unité de calcul 15 pour le calcul final du nombre de chiffres significatifs.

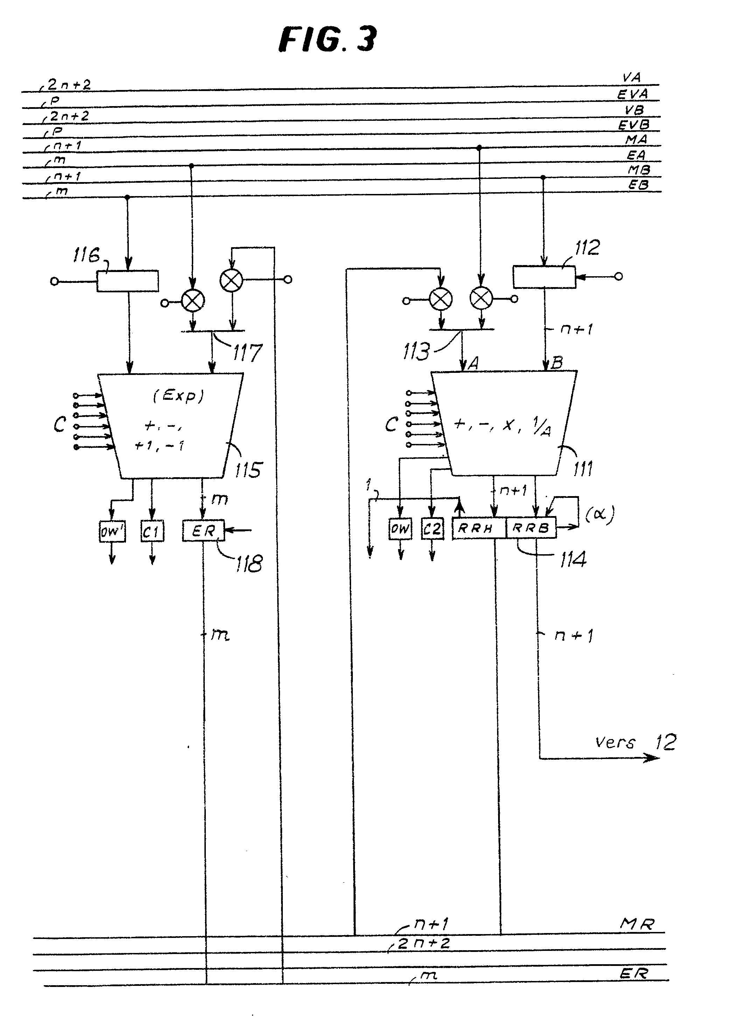

L'unité de calcul 11 (figure 3) comporte un ensemble d'opérateurs 111 pour effectuer, comme connu en soi, les opérations d'addition, de soustraction, de multiplication et d'inversion sur les mantisses des opérandes. Un registre 112 à n + 1 positions est relié à l'une (par exemple celle affectée à MB) des deux lignes de données affectées aux mantisses de valeurs moyennes et a sa sortie reliée à l'ensemble d'opérateurs 111. L'autre mantisse de valeur moyenne (MA dans l'exemple illustré) est transmise à l'ensemble 11 par un multiplexeur de bus 113. Bien entendu, on pourrait aussi affecter un registre particulier à cette mantisse.

La sortie de l'ensemble 111 est reliée à un registre de résultat 114 double longueur à (2n + 2) positions. La mantisse du résultat est prélevée dans la moitié haute RRH à n + 1 positions du registre 114 et est disponible sur le bus MR, parmi les lignes de données 6, affecté à la mantisse de résultat MR. La partie tronquée du résultat, figurant dans la partie basse RRB à n + 1 positions du registre 114, est transmise à l'unité 12 pour la mise à jour de la variance associée au résultat, comme expliqué plus en détail plus loin. La dernière position du registre 114 est rebouclée sur elle-même. Ainsi, quel que soit le nombre de décalages à droite réalisés dans le registre 114 alors que celui-ci contient initialement un nombre non nul, il subsistera un « 1 » dans la $(2n + 2)^{\text{ème}}$ position et toute trace du nombre initial ne sera pas perdue (rebouclage par liaison $\alpha$) en vue du calcul d'erreur.

Comme connu en soi, une bascule de débordement OW et une bascule de retenue C2 sont aussi associées à l'ensemble d'opérateurs 111. Leurs contenus, ainsi que la liaison de débordement de capacité du registre 114 fournissent des signaux S à l'organe de contrôle 3.

La sortie de la partie haute du registre de résultat 114 est rebouclée sur l'entrée de l'ensemble 111 par le bus 113 de manière à permettre la réutilisation immédiate du contenu du registre 114 pour la suite du calcul.

L'unité de calcul 11 comporte encore un ensemble d'opérateurs 115 pour effectuer, sur les exposants des valeurs moyennes, des opérations d'addition et de soustraction entre deux exposants et d'addition ou de soustraction de 1 (en réponse à un décalage d'un pas à droite ou à gauche de la mantisse associée). Un registre 116 à m positions est relié à l'un (EB dans l'exemple illustré) des deux bus 5 affectés aux exposants des valeurs moyennes et a sa sortie reliée à l'ensemble d'opérateurs 115. L'autre exposant (EA) est transmis à l'ensemble 115 par un multiplexeur de bus 117.

La sortie de l'ensemble 115 est reliée à un registre 118 simple longueur à m positions. L'exposant du résultat dont la mantisse figure dans le registre 114 est prélevé dans le registre 118 et est transmis sur la ligne, parmi les lignes de données 6, affectée à l'exposant de résultat ER.

Des bascules de retenue C1 et de débordement OW' sont associées à l'ensemble d'opérateurs 115 et fournissent des signaux d'état à l'organe de contrôle 3.

La sortie du registre 118 est rebouclée sur l'entrée de l'ensemble 115 par le bus 117 de manière à pouvoir réutiliser le contenu du registre 118 directement pour la suite du calcul.

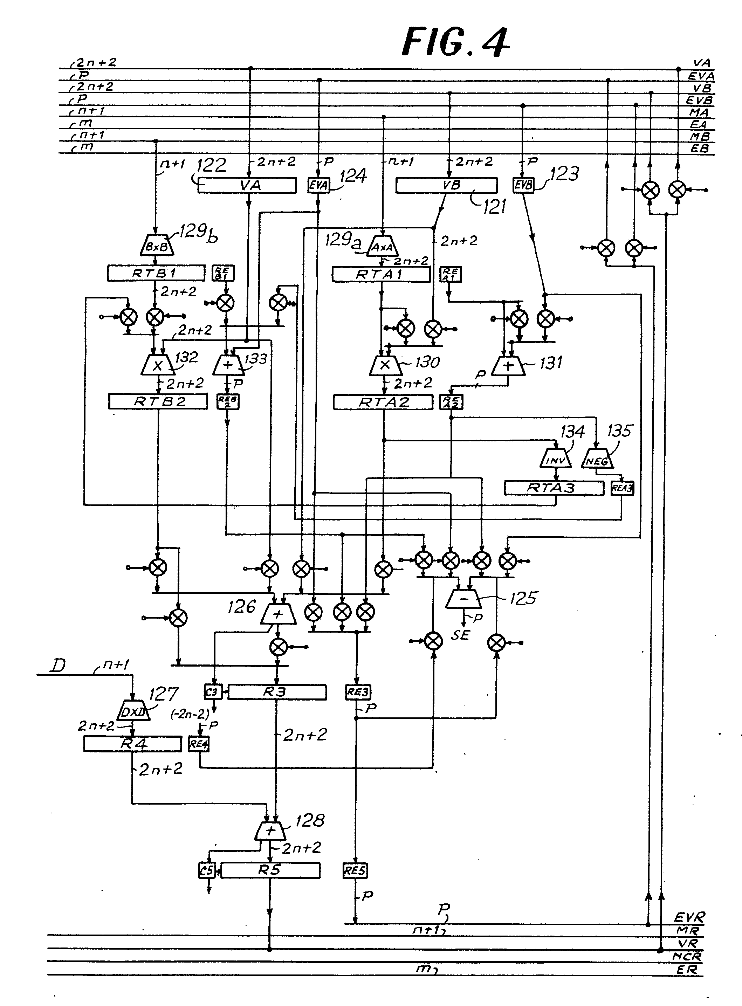

L'unité de calcul de variance 12 (figure 4) contient plusieurs registres et opérateurs pour effectuer le calcul des variances associées aux mantisses des résultats calculés dans l'unité 11.

Ces registres et opérateurs ainsi que leurs interconnexions seront détaillés ci-après à l'occasion de la description du déroulement de plusieurs opérations arithmétiques. On décrira uniquement les opérations d'addition algébrique, de multiplication et d'inversion. La soustraction est un cas particulier de l'addition algébrique et la division est le produit d'une inversion et d'une multiplication.

## Addition algébrique

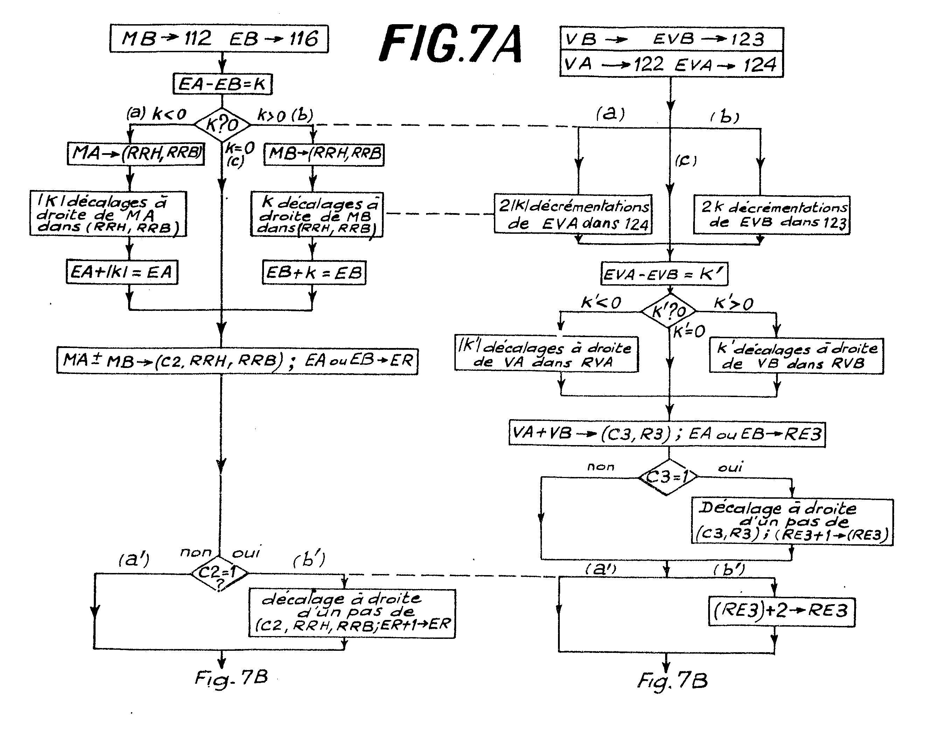

Les opérations élémentaires d'une addition algébrique sont schématisées sur l'organigramme des figures 7A-7B.

Les données A et B à additionner sont disponibles sous forme de mantisses MA, MB et exposants EA, EB des valeurs moyennes et de mantisses VA, VB et exposants EVA, EVB des variances associées aux mantisses MA, MB. On suppose que la mantisse est en représentation « valeur absolue + signe » et l'exposant en complément à deux. Le traitement des signes s'effectue séparément comme connu en soi.

Pour le calcul de la valeur moyenne, les opérations élémentaires suivantes sont effectuées :
— chargement de la mantisse MB dans le registre 112 et de l'exposant EB dans le registre 116,
— soustraction EA-EB effectuée dans l'ensemble 115 ; si le résultat K est négatif, transfert de la mantisse MA dans le registre 114, |K| décalages à droite (dénormalisation) de MA et transformation de EA en EA + |K| = ER ; si le résultat K est positif, transfert de la mantisse MB dans le registre 114, K décalages à droite de MB et transformation de EB en EB + K = ER ; si le résultat K est nul, passage direct à l'étape suivante,
— suivant les signes de MA et MB, il est effectué dans l'ensemble 111 l'opération Ma ± MB qui fournit comme résultat le contenu de (C2, RRH, RRB) ; si la retenue C2 est nulle, passage direct à l'étape suivante ; si la retenue C2 est égale à 1, décalage à droite d'une position du contenu de (C2, RRH, RRB) et formation de ER = ER + 1 dans le registre 118,
— si le contenu de (RRB) n'est pas nul, transfert de (RRB) vers l'unité 12,
— prélèvement du contenu de (RRH) et du registre 118 pour fournir la mantisse MR et l'exposant ER du résultat de l'addition algébrique.

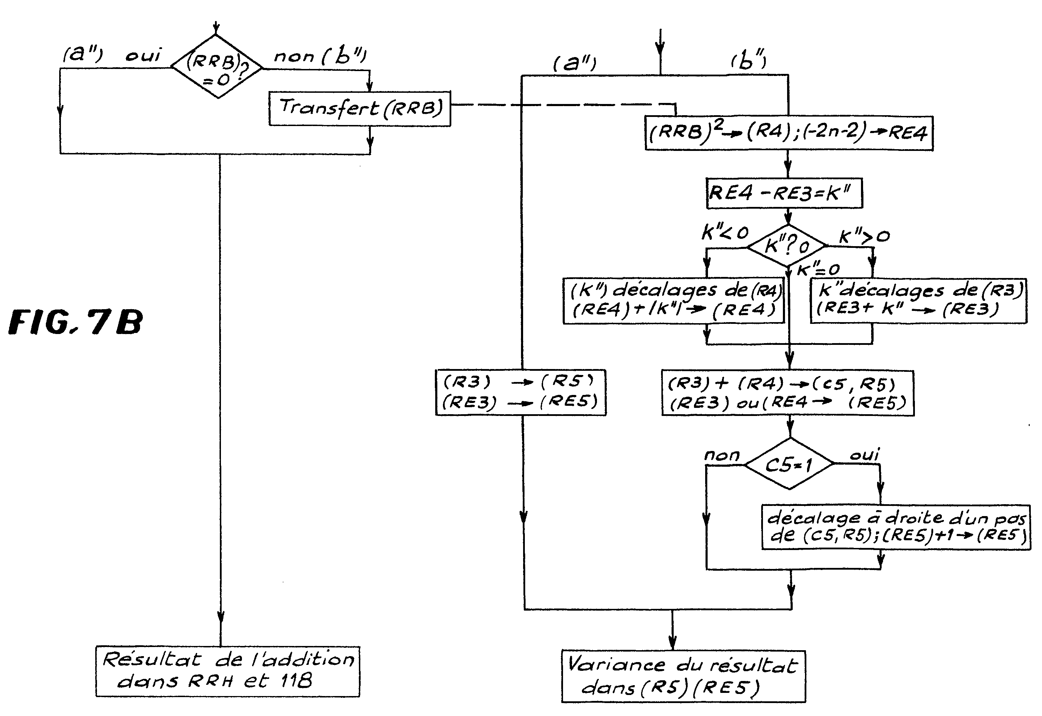

Pour le calcul de la variance, les opérations élémentaires suivantes sont effectuées (sur les figures 7A, 7B on a représenté sur des mêmes lignes les opérations qui se déroulent de façon correspondante dans les unités 11 et 12) :
— les mantisses VB et VA sont chargées dans des registres 121, 122 à (2n + 2) positions reliés aux deux lignes, parmi les lignes de données 5, affectées à VB et VA et les exposants EVB et EVA dans des registres 123, 124 à p positions reliés aux deux lignes, parmi les lignes de données 5, affectées à EVB et EVA,

— si le nombre K = EA − EB est négatif, 2 |K| décrémentations de EVA dans le registre 124 pour obtenir EVA = EVA − 2 |K| ; si le nombre K est positif, 2 K décrémentations de EVB dans le registre 123 pour obtenir EVB = EVB − 2 K (on notera qu'une des caractéristiques de l'invention est d'associer le décalage d'une mantisse de valeur moyenne à l'incrémentation — ou décrémentation — d'un nombre correspondant de pas de l'exposant de cette valeur moyenne et à l'incrémentation — ou décrémentation — d'un nombre double de pas de l'exposant de la variance associée à cette mantisse),

— soustraction EVA − EVB = K' effectuée dans l'opérateur 125 ; si K' est négatif, |K'| décalages à droite de VA dans le registre 122 ; si K' est positif, K' décalages à droite de VB dans le registre 121 ; si K' est nul, passage direct à l'étape suivante,

— somme VA + VB réalisée au moyen de l'opérateur 126, le résultat étant disponible dans le registre R3 auquel est associé le registre de retenue C3 ; stockage de l'exposant ER, déterminé après la dénormalisation éventuelle d'un des opérandes, avant examen de la retenue C3, dans un registre RE3,

— si la retenue C3 est égale à 1, décalage à droite d'un pas de l'ensemble (C3, R3) et incrémentation de l'exposant dans le registre RE3 d'une unité : le contenu (RE3) de ce registre devient (RE3) = (RE3) + 1,

— si la retenue C2 est égale à 1, double incrémentation de (RE3) parallèlement à l'incrémentation simple de ER : (RE3) = (RE3) + 2,

— si le contenu de RRB n'est pas nul sur le bus D, il est élevé au carré par l'opérateur 127 ; le résultat est transféré dans le registre de mantisse R4 à (2n + 2) positions, tandis que la quantité − (2n + 2) est chargée dans le registre d'exposant associé à RE4 à p positions ; l'addition des contenus des registres R3 et R4 est ensuite effectuée : la différence K'' = (RE4) − (RE3) est calculée par l'opérateur 125 ; si K'' est négatif, |K''| décalages à droite du contenu de R4 et addition de |K''| au contenu de RE4 : (RE4) = (RE4) + |K''| ; si K'' est positif, K'' décalages à droite du contenu de R3 et addition de K'' au contenu de RE3 : (RE3) = (RE3) + K'' ; si K'' est nul, passage direct à l'étape suivante consistant à additionner les contenus des registres R3 et R4 au moyen de l'opérateur 128 et à transférer la somme dans le registre R5 à (2n + 2) positions auquel est associé le registre de retenue C5 et le registre d'exposant RE5 ; le contenu de RE3 (ou RE4) est transféré dans RE5 et, si (C5) est égal à 1, décalage à droite d'un pas du contenu de (C5, R5) et addition de 1 au contenu de RE5 : (RE5) + 1,

— si le contenu de RRB était nul, transfert simple des contenus de R3 et RE3 dans R5 et RE5,

— on dispose finalement dans R5 et RE5 de la mantisse et de l'exposant de la variance associée au résultat de l'addition effectuée dans l'unité de calcul 11.

Comme cela ressort de ce qui précède, la variance associée au résultat de l'addition des données A et B est égale à la somme des variances associées à ces données augmentée du carré du contenu de la partie basse du registre de résultat de l'unité de calcul de valeur moyenne.

On décrit maintenant ci-après le déroulement d'une opération de multiplication.

### Multiplication algébrique

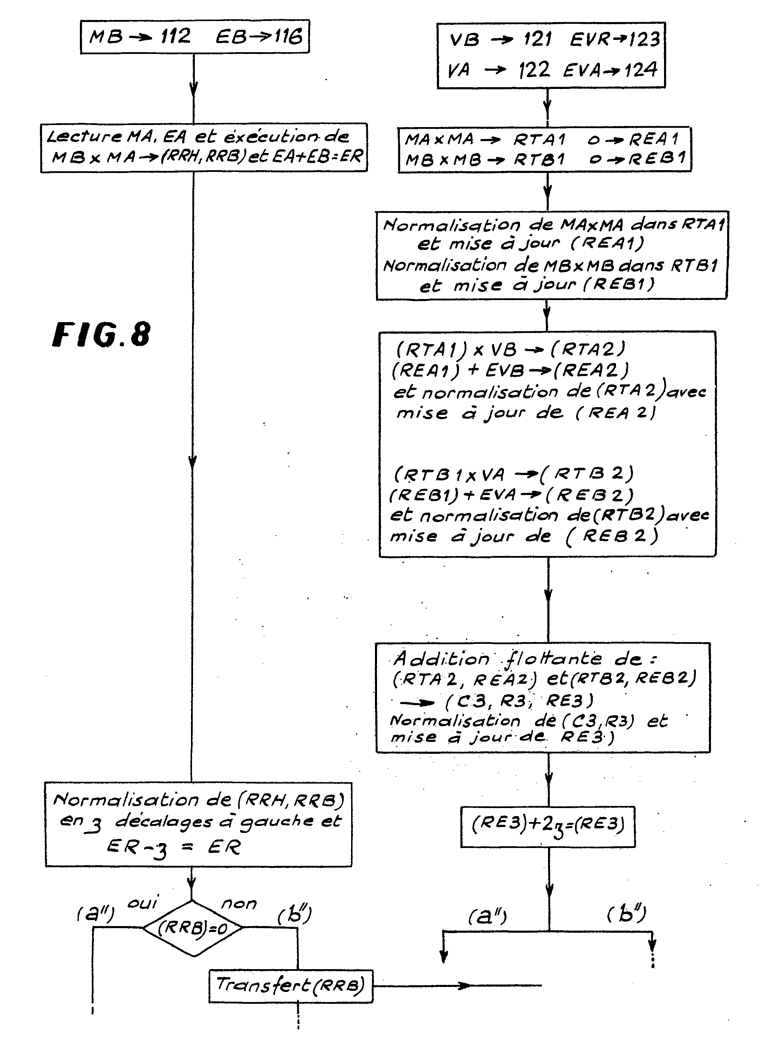

Les opérations élémentaires d'une multiplication algébrique sont schématisées sur l'organigramme de la figure 8.

Comme précédemment, les données A et B à multiplier l'une par l'autre sont disponibles sous forme de valeur moyenne (MA, EA), (MB, EB) et de variance (VA, EVA), (VB, EVB). Les signes des mantisses sont traités séparément dans cet exemple.

Pour le calcul de la valeur moyenne du produit, on réalise les opérations suivantes dans l'unité de calcul 11 :

— chargement de la mantisse MB et de l'exposant EB dans les registres 112 et 116,

— lecture de MA et EA et exécution dans l'ensemble 111 du produit MA × MB stocké dans le registre 114 et, dans l'ensemble 115, de la somme ER = EA + EB stockée dans le registre 118 ; la multiplication est effectuée par un opérateur câblé ou un opérateur séquentiel utilisant la méthode d'additions-décalages successifs, opérateur connu en soi,

— normalisation éventuelle du contenu du registre 114 (RRH, RRB) par z décalages à gauche (Z = 0 ou 1) et transformation de ER en ER − z dans le registre 118,

— si le contenu de RRB est non nul, il est transféré dans l'unité de calcul 12,

— le résultat de la multiplication est, pour la mantisse, prélevé dans RRH et, pour l'exposant, dans le registre 118.

La variance associée au résultat de la multiplication A × B est égale à :

$$MA^2(VB, EVB) + MB^2(VA, EVA) + (RRB)^2$$

Les opérations élémentaires suivantes sont effectuées (sur la figure 8, on a représenté en parallèle les opérations qui se déroulent de façon correspondante dans les unités 11 et 12) :

— chargement des mantisses VB et VA dans les registres 121, 122 et des exposants EVB, EVA dans les registres 123, 124,

7

**0 018 298**

— élévation au carré des mantisses MA et MB au moyen d'opérateurs 129a et 129b et stockage des résultats dans des registres RTA1 et RTB1 à (2n + 2) positions, chargement de la valeur nulle dans les registres de variance REA1 et REB1 associés aux registres RTA1 et RTB1,

— normalisation de MA × MA dans le registre RTA1 (xA1 décalages à gauche, avec xA1 = 0 ou 1) et mise à jour correspondante de (REA1) = (REA1) + xA1 ; normalisation de MB × MB dans le registre RTB1 (xB1 décalages à gauche, avec xB1 = 0 ou 1) et mise à jour correspondante de (REB1) = (REB1) + xB1,

— calcul de $MA^2(VB, EVB)$ en effectuant le produit (RTA1) × VB au moyen de l'opérateur 130, et la somme REA1 + EVB au moyen de l'opérateur 131 ; stockage du produit (RTA1) × VB dans le registre RTA2 à (2n + 2) positions et de la somme REA1 + EVB dans le registre REA2 à p positions ; normalisation du contenu du registre RTA2 (xA2 décalages à gauche, avec xA2 = 0 ou 1) et mise à jour de (REA2) = (REA2) + xA2,

— calcul de $MB^2$ (VA, EVA) en effectuant le produit (RTB1) × VA au moyen de l'opérateur 132 et la somme REB1 + EVA au moyen de l'opérateur 133 ; stockage du produit (RTB1) × VB dans le registre RTB2 à (2n + 2) positions ; normalisation du contenu du registre RTB2 (xB2 décalages à gauche, avec xB2 = 0 ou 1) et mise à jour de (REB2) = (REB2) + xB2,

— addition flottante de (RTA2, REA2) et (RTB2, REB2) au moyen des opérateurs 125 et 126 (la réalisation d'une addition flottante est détaillée plus haut dans le cas de l'exemple de l'addition arithmétique de deux valeurs moyennes) ; stockage du résultat de cette addition dans (C3, R3), pour la mantisse, et dans RE3, pour l'exposant ; dénormalisation de (C3, R3) si C3 = 1 et mise à jour correspondante de (RE3) : (RE3) = (RE3) + 1,

— mise à jour de (RE3) en fonction du nombre z de pas de décalages effectués pour la normalisation de (RRH, RRB) : (RE3) = (RE3) + 2z,

— addition flottante de (R3, RE3) et de $(RRB)^2$ comme indiqué plus haut à propos de l'addition algébrique, le résultat final du calcul de variance étant disponible dans R5 pour la mantisse VR et dans RE5 pour l'exposant EVR.

On décrira maintenant le déroulement d'une opération d'inversion.

### Inversion

La donnée A à inverser est disponible sous forme de valeur moyenne (MA, EA) et variance (VA, EVA). Dans l'unité 11 sont effectuées les opérations suivantes :

— inversion de MA dans l'ensemble d'opérateurs 111 et stockage de 1/MA dans le registre 114,

— négation de EA dans l'ensemble d'opérateurs 115 et stockage de ER = −EA dans le registre 118,

— normalisation de (RRH, RRB) dans le registre 114 (q décalages à droite) et mise à jour de l'exposant dans le registre 118 : (ER) = (ER) + q,

— transfert de (RRB) dans l'unité 12, la mantisse du résultat étant prélevée dans RRH.

La variance associée est donnée par la formule $(1/MA)^4 × (VA, EVA)$. Ce calcul est effectué dans l'unité 12 comme suit :

— élévation de MA au carré par l'opérateur 129a et stockage du résultat dans le registre RTA1 ; chargement de la valeur nulle dans REA1 ; normalisation de MA × MA dans RTA1 avec mise à jour correspondante de REA1 ;

— élévation au carré de MA × MA par l'opérateur 130 et stockage du résultat dans le registre RTA2 ; calcul de (REA1) + (REA1) par l'opérateur 131 et stockage du résultat dans le registre REA2 ; normalisation de $(MA × MA)^2$ dans RTA2 avec mise à jour correspondante de REA2 ;

— inversion du contenu de RTA2 au moyen de l'opérateur 134 et stockage du résultat dans le registre RTA3 ; négation du contenu de REA2 au moyen de l'opérateur 135 et stockage du résultat dans le registre REA3 ; normalisation de (RTA3) avec mise à jour correspondante de (REA3) ;

— calcul de (RTA3, REA3) × (VA, EVA) au moyen des opérateurs 132, 133, comme décrit ci-dessus pour le calcul de $MB^2$(VA, EVA) dans le cas de la multiplication, et stockage du résultat dans (RTB2) et (REB2) ;

— transfert de (RTB2) et (REB2) dans les registres R3 et RE3 ;

— mise à jour de (RE3) en fonction du nombre q de pas de décalage effectués pour la normalisation de (RRH, RRB), et

— addition flottante de (R3, RE3) et $(RRB)^2$ comme indiqué plus haut, avec résultat disponible dans (R5) et (RE5) pour la mantisse VR et l'exposant EVR de la variance recherchée.

Par combinaison des trois opérations décrites ci-dessus, tous les calculs désirables peuvent être effectués, chaque fonction à réaliser étant décomposée en opérations arithmétiques simples.

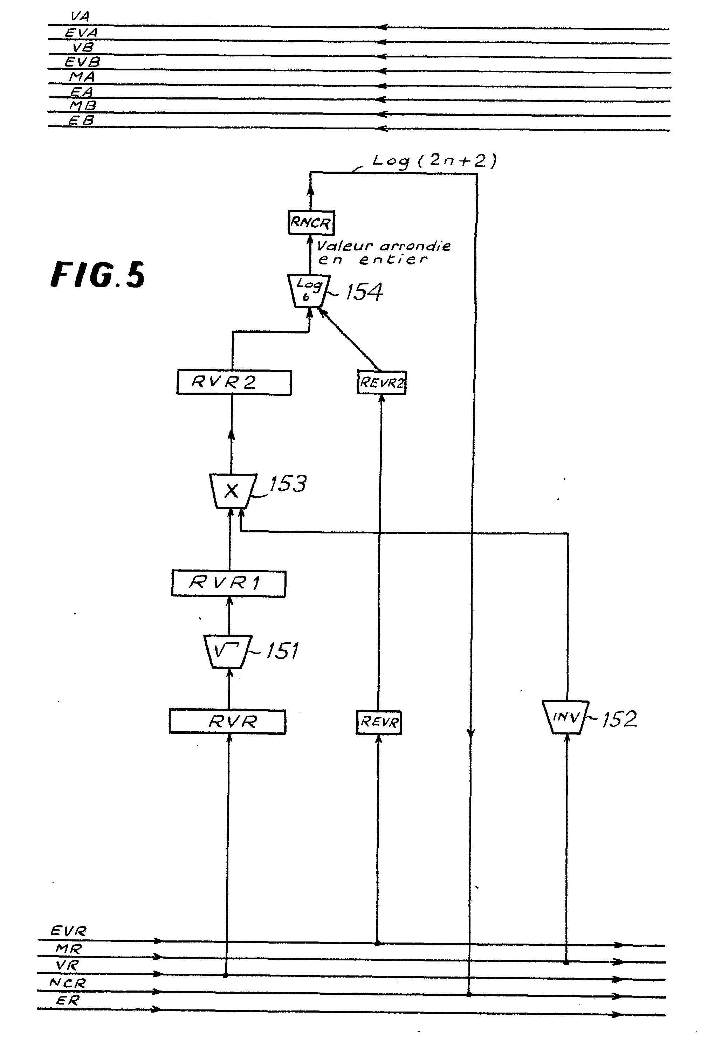

Lorsque l'on dispose d'un résultat final sous forme de valeur moyenne (MR, ER) et de la variance (VR, EVR) associée à MR, il reste à calculer le nombre C de chiffres significatifs exacts dans MR. Ceci est effectué comme suit dans l'unité de calcul 15 (figure 5).

Le nombre C est donné par la formule C = valeur entière de C', avec $C' = - \log_b ((VR, EVR) 1/2)/MR$, soit $C' = - (1/2) \log_b (EVR, VR) + \log_b MR$. La valeur b est la base de numération, c'est-à-dire 2 dans l'exemple illustré par les figures 1-5.

L'unité 15 comporte un registre RVR et un registre REVR reliés respectivement aux lignes, parmi les lignes de données 6, affectées à VR et EVR.

8

Le calcul de (VR) 1/2 est effectué au moyen de l'opérateur 151 et transféré dans un registre RVR1, tandis que (EVR) est divisé par deux par simple décalage à droite d'un pas.

Le calcul de 1/MR est effectué au moyen d'un opérateur 152 dont l'entrée est reliée à la ligne, parmi les lignes de données 6, affectées à MR, et le calcul de (RVR1) × (1/MR) est effectué par un opérateur 153, le résultat étant stocké dans un registre RVR2 associé à un registre d'exposant REVR2 dans lequel est transféré le contenu décalé de REVR.

Un opérateur 154 permet de calculer $C' = - \log_b ((VR, EVR) 1/2)/MR$ et la valeur entière tronquée ou arrondie de C' est stockée dans le registre RNCR dont la sortie est reliée à la ligne, parmi les lignes de données 6, affectées à l'information NCR « nombre de chiffres significatifs exacts ». Cette information est disponible en sortie du dispositif de calcul, au travers du processeur de commande.

Dans le cas où les résultats des calculs effectués par le dispositif de calcul sont affichés, l'information NCR peut être utilisée pour ne laisser subsister que le nombre de chiffres significatifs exacts des résultats.

Pour plus de clarté, on n'a pas fait figurer sur le dessin les liaisons de commande entre l'organe de contrôle et les autres éléments du dispositif de calcul, liaison de commande qui contrôlent notamment :

— le transfert des données à travers les portes placées sur les lignes de transfert 5, 6 de données et représentées sur les figures 2 à 5,

— les décalages et stockages dans les registres, et

— les opérateurs des unités de calcul.

De même, ne figurent pas toutes les liaisons apportant à l'organe de contrôle 3 les informations nécessaires à celui-ci pour commander les décalages et les successions des opérations élémentaires.

Ces différentes liaisons découlant directement du fonctionnement décrit ci-dessus des unités de calcul 11, 12, 13 n'ont pas à être décrites ici plus en détail.

Dans ce qui précède, on a envisagé le cas d'un ensemble de calcul comportant des unités séparées pour réaliser les calculs de valeur moyenne, de variance et du nombre de chiffres significatifs exacts. En outre, pour les unités 12 et 15, on a prévu des registres et opérateurs spécifiques pour les différentes opérandes.

Bien entendu, il ne s'agit là que d'un mode particulier de réalisation qui a été choisi pour la commodité de l'exposé.

L'homme de l'art sait bien que le nombre de registres et opérateurs peut être réduit dans la perspective d'une optimisation sur le plan matériel, au prix, éventuellement, d'un accroissement du temps de calcul. Ainsi, il pourra être envisagé de ne pas utiliser une unité de calcul entièrement indépendante pour effectuer les calculs de variance et de nombre de chiffres significatifs exacts mais d'utiliser, pour ces calculs, des ressources (registres et opérateurs) de l'unité de calcul de valeur moyenne, cette dernière étant de conception classique.

Dans la description qui précède, on a envisagé le cas d'un dispositif de calcul travaillant sur des données en représentation binaire.

Bien entendu, l'invention est applicable pour les calculs effectués sur des données représentées dans d'autres bases de numération, par exemple des données en représentation décimale ou binaire codée décimale ou hexadécimale.

Dans ce cas, la mise au format n + 1 des mantisses de données initiales en format n peut être réalisée comme suit (figure 6).

La mantisse MA de la donnée A étant disponible en représentation à n digits en base b avec son information de troncature associée TA, on élabore la mantisse de valeur moyenne MVA, en ajoutant, du côté des poids faibles, un $(n + 1)^{ème}$ digit représentant la valeur décimale 5 (c'est-à-dire $(1/2) b^{-n}$, b étant la base de numération). Pour ce faire, on commande par l'information TA des portes « ET » ET1, ET2, ET3, ET4 dont les entrées sont aux niveaux logiques respectifs 0, 1, 0, 1 dans l'ordre des poids décroissants. Les sorties de ces portes ET sont reliées à la $(n + 1)^{ème}$ position du registre MVA.

Lorsqu'une mantisse de donnée initiale de format n est à mettre au format (n + 1), cette mantisse est transférée dans les n premières positions du registre MVA et la quantité 0 ou 5 est transférée dans la $(n + 1)^{ème}$ (selon que TA = 0 ou TA = 1), sous la commande CI.

Lorsqu'une mantisse de donnée non initiale de format (n + 1) est à stocker dans le registre MVA, cette mantisse est acheminée par la ligne de données LA et stockée dans le registre sous la commande CR.

Pour les calculs de valeurs moyennes et de variances de résultats et du nombre de chiffres significatifs exacts on opère ensuite de façon semblable quelle que soit la base de numération.

Au lieu d'utiliser une logique câblée comme celle représentée par la figure 6, la mise au format des mantisses de données initiales pourra être effectuée directement par l'organe de contrôle.

On donne ci-après des exemples numériques en base décimale de mise en œuvre du procédé conforme à l'invention. Ces exemples illustrent des cas difficiles pour les ordinateurs classiques.

Pour chaque étape du calcul, dans chaque exemple, on évalue le résultat dénormalisé Rd, la variance $\sigma d^2$ associée au résultat dénormalisé, le résultat normalisé Rn dans le registre double longueur, le résultat tronqué Rt dans la partie haute du registre double longueur, la variance mise à jour $\sigma T^2$ (addition de $(RRB)^2$) et le nombre C de chiffres significatifs exacts.

Tous ces résultats sont donnés dans les tableaux ci-après. En regard, dans la dernière colonne de chaque tableau on fait figurer le résultat exact Re.

**0 018 298**

<center>Exemple 1</center>

On effectue le calcul suivant :

$$Z = (X + Y - X)/Y$$

avec $X = 7 \cdot 10^8$ et $Y = 2 \cdot 10^{-9}$

le format utilisé est tel que $(n + 1) = 4$.

$C = -\infty$ signifie que le résultat obtenu est complètement faux, c'est-à-dire qu'aucun chiffre n'est exact.

$C = \infty$ signifie que tous les chiffres sont exacts.

<center>Exemple 2</center>

On effectue le calcul suivant :

$$x = d \ x \ d \ y = d + x \ u = y - x$$

avec $d = 10^6$. Le format utilisé est tel que $(n = 1) = 4$.

<center>Exemple 3</center>

On effectue le même calcul que dans l'exemple 2 avec $d = 10^{-8}$.

<center>Exemple 4</center>

On effectue le même calcul que dans l'exemple 2 avec $d = 10^2$.

Bien entendu, diverses modifications ou adjonctions pourront être apportées aux modes de réalisation décrits ci-dessus du procédé et du dispositif de calcul conformes à l'invention sans pour autant sortir du cadre de protection défini par les revendications annexées.

Ainsi, on pourra travailler en double précision ou en multiple précision en admettant des séquences de calculs plus longues et les stockages des résultats intermédiaires dans la mémoire locale.

<center>(Voir Tableaux, pages 11 et 12)</center>

<center>10</center>

## Exemple 1

| | $R_d$ | $\sigma_d^2$ | $R_n$ | $R_t$ | $\sigma_T^2$ | C | Re |
|---|---|---|---|---|---|---|---|
| X | $0,7 \ 10^9$ | O | $0,7 \ 10^9$ | $0,7 \ 10^9$ | O | $\infty$ | — |
| Y | $0,2 \ 10^{-8}$ | O | $0,2 \ 10^{-8}$ | $0,2 \ 10^{-8}$ | O | $\infty$ | — |
| $Y_d$ | $0,00000001 . 10^9$ | O | $0,00000001 \ 10^9$ | $0,0000 \ 10^9$ | $1 \ 10^{-16}$ | $-\infty$ | — |
| X + Y | $0,7000 \ 10^9$ | $1 \ 10^{-16}$ | $0,7000 \ 10^9$ | $0,7000 \ 10^9$ | $1 \ 10^{-16}$ | 7,8 | — |
| (X + Y) – X | $0,0000 \ 10^9$ | $1 \ 10^{-16}$ | $0,0000 \ 10^9$ | $0,0000 \ 10^9$ | $1 \ 10^{-16}$ | $-\infty$ | — |
| 1/Y | $5,0 \ 10^8$ | O | $0,5 \ 10^9$ | $0,5 \ 10^9$ | O | $\infty$ | — |
| Z | $0,0000 \ 10^9$ | $0,25 \ 10^{-16}$ | $0,0000 \ 10^{18}$ | $0,0000 \ 10^{18}$ | $0,25 \ 10^{-16}$ | $-\infty$ | 1 |

$Y_d$ = Y dénormalisé avec rebouclage sur elle-même de la dernière position du registre double longueur

## Exemple 2

| | $R_d$ | $\sigma_d^2$ | $R_n$ | $R_t$ | $\sigma_T^2$ | C | $R_e$ |
|---|---|---|---|---|---|---|---|
| d | $0,1 . 10^7$ | O | $0,1 . 10^7$ | $0,1 . 10^7$ | O | — | $0,1 . 10^7$ |
| x | $0,01 . 10^{14}$ | O | $0,1 . 10^{13}$ | $0,1 . 10^{13}$ | O | — | $0,1 . 10^{13}$ |
| $d_d$ | $0,0000001 . 10^{13}$ | O | | $0,0000 \ 10^{13}$ | $1 . 10^{-14}$ | O | $0,0000001 . 10^{13}$ |
| y | $0, 1000 \ 10^{13}$ | $1 . 10^{-14}$ | $0,1000 . 10^{13}$ | $0,1000 \ 10^{13}$ | $1 . 10^{-14}$ | 6 | $0,1000001 . 10$ |
| u | $0 . 10^{13}$ | $1 . 10^{-14}$ | $0,0000 . 10^{13}$ | $0,0000 \ 10^{13}$ | $1 . 10^{-14}$ | O | $0,1 . 10^7$ |

## Exemple 3

| | $R_d$ | $\sigma_d 2$ | $R_n$ | $R_t$ | $\sigma_T 2$ | C | $R_e$ |
|---|---|---|---|---|---|---|---|
| d | $0,1\ 10^{-7}$ | O | $0,1 . 10^{-7}$ | $0,1 . 10^{-7}$ | O | | $0,1\ 10^{-7}$ |
| x | $0,01 . 10^{-14}$ | O | $0,1 . 10^{-15}$ | $0,1 . 10^{-15}$ | O | | $0,1\ 10^{-15}$ |
| $x_d$ | $0,000000011.10^{-7}$ | O | | $0,0000\ 10^{-7}$ | $1 . 10^{-16}$ | O | $0,000000001$ |
| y | $0,1000\ 10^{-7}$ | $1. 10^{-16}$ | $0,1000 . 10^{-7}$ | $1 . 10^{-16}$ | O | O | $0,100000001$ |
| $u = y - x_d$ | $0,1000\ 10^{-7}$ | $2. 10^{-16}$ | $0,1000 . 10^{-7}$ | $0,1000\ 10^{-7}$ | $2 . 10^{-16}$ | 7 | $0,1 . 10^{-7}$ |

## Exemple 4

| | $R_d$ | $\sigma_d 2$ | $R_n$ | $R_t$ | $\sigma_t 2$ | C | $R_e$ |
|---|---|---|---|---|---|---|---|
| d | $0,1 . 10^3$ | O | $0,1 . 10^3$ | $0,1 . 10^3$ | O | $\infty$ | $0,1 . 10^3$ |
| x | $0,01 . 10^6$ | O | $0,1 . 10^5$ | $0,1 . 10^5$ | O | $\infty$ | $0,1 . 10^5$ |
| $d_d$ | $0,001 . 10^5$ | O | | $0,001 . 10^5$ | O | $\infty$ | $0,001 . 10^5$ |
| $y = d_d + x$ | $0,1010 . 10^5$ | O | $0,1010 . 10^5$ | $0,1010 . 10^5$ | O | $\infty$ | $0,1010 . 10^5$ |
| $u = y - x$ | $0,0010 . 10^5$ | O | $0,1000 . 10^3$ | $0,1000 . 10^3$ | O | $\infty$ | $0,1 . 10^3$ |

# 0 018 298

**Revendications**

1. Procédé pour obtenir le résultat final d'un calcul qui est effectué sur des données numériques en représentation en virgule flottante en base b dans un dispositif de calcul numérique à partir d'au moins une donnée numérique initiale et qui comprend une ou plusieurs opérations arithmétiques devant être effectuées pour aboutir au résultat final, caractérisé en ce qu'un organe de contrôle :

a) associe automatiquement à la ou à chaque donnée initiale (A, B) une valeur moyenne en représentation en virgule flottante avec mantisse (MA, MB) en format $n + 1$ et exposant (EA, EB) et une information d'erreur également en représentation en virgule flottante avec mantisse (VA, VB) et exposant (EVA, EVB), ladite mantisse de valeur moyenne étant la valeur réelle ou une valeur approchée de la mantisse de la donnée initiale, et ladite information d'erreur associée étant nulle ou non selon que la valeur réelle de la donnée initiale et sa valeur numérique en représentation en virgule flottante en format n coïncident ou non ;

b) effectue automatiquement la première opération arithmétique à réaliser sur une ou plusieurs premières données initiales en calculant conjointement :

— d'une part, une valeur moyenne de résultat fournie en représentation en virgule flottante avec mantisse (MR) et exposant (ER) et obtenue en effectuant ladite première opération sur la ou les valeurs moyennes de la ou des données initiales, et

— d'autre part, une information d'erreur associée à la valeur moyenne de résultat, fournie en représentation en virgule flottante avec mantisse (VR) et exposant (EVR) et obtenue à partir de la ou chaque information d'erreur et, le cas échéant, de la ou chaque valeur moyenne de la ou des données initiales, en fonction de la nature de l'opération arithmétique effectuée ;

c) effectue de façon semblable la ou chaque autre opération arithmétique éventuelle à réaliser sur au moins une donnée initiale ou un résultat obtenu précédemment jusqu'à l'obtention d'une valeur moyenne et d'une information d'erreur de résultat final, et

d) détermine le nombre (C) de chiffres significatifs exacts dans la valeur moyenne de résultat final à partir de cette valeur moyenne et de l'information d'erreur associée.

2. Procédé selon la revendication 1, dans lequel les mantisses des données initiales sont tronquées dans le cas où elles ne peuvent pas être exactement transcrites dans une représentation numérique en format n, caractérisé en ce que l'organe de contrôle

— associe à chaque donnée initiale une information de troncature (T) ayant un premier ou un second état selon que la mantisse de cette donnée est tronquée ou non, et

— lorsque l'information de troncature (T) associée à une donnée initiale est dans son premier état, on associe à cette donnée, d'une part, une mantisse de valeur moyenne de format $n + 1$ obtenue en complétant la mantisse de donnée initiale tronquée en format n par introduction de la valeur $1/2 \cdot b$ dans la $(n + 1)^{eme}$ position, et, d'autre part, une information d'erreur constituée par la variance $1/4 \, b^{-2n}$ ou l'écart-type $1/2 \cdot b^{-n}$.

3. Procédé selon la revendication 1, dans lequel les mantisses des données initiales sont arrondies dans le cas où elles ne peuvent pas être exactement transcrites dans une représentation numérique en format n, caractérisé en ce que l'organe de contrôle :

— associe automatiquement à chaque donnée initiale devant être arrondie, d'une part, une mantisse de valeur moyenne de format $n + 1$ dont la valeur est la plus proche de celle de la mantisse de donnée initiale et, d'autre part, une information d'erreur évaluée à partir de la valeur de la partie tronquée de la mantisse de donnée initiale ou de la valeur du complément de cette partie tronquée, selon le sens de l'arrondi.

4. Procédé selon l'une quelconque des revendications 1 à 3, caractérisé en ce que, lorsqu'au cours d'une opération de normalisation ou dénormalisation d'une mantisse de valeur moyenne on décrémente ou incrémente l'exposant de cette valeur moyenne d'un nombre de pas fonction du nombre de décalages de la mantisse, on décrémente ou incrémente l'exposant de l'information d'erreur associée d'un nombre double de pas lorsque l'information d'erreur est la variance et du même nombre de pas lorsque l'information d'erreur est l'écart-type.

5. Procédé selon l'une quelconque des revendications 1 à 4, caractérisé en ce que, pour chaque troncature ou arrondi d'une mantisse de valeur moyenne, on met à jour l'information d'erreur associée en utilisant, en cas de troncature, la partie tronquée de la mantisse et, en cas d'arrondi, ladite partie tronquée ou son complément selon le sens de l'arrondi.

6. Procédé selon l'une quelconque des revendications 1 à 5, caractérisé en ce que l'organe de contrôle associe automatiquement à chaque opérande utilisé une information binaire ayant un premier ou un second état selon que cet opérande est une donnée numérique initiale ou a déjà subi au moins un traitement arithmétique.

7. Dispositif pour la mise en œuvre du procédé selon l'une quelconque des revendications 1 à 6, dispositif comportant au moins une unité de calcul, au moins un registre d'exposant d'opérande et un registre de mantisse d'opérande, une mémoire locale et un organe de contrôle pour émettre des signaux commandant l'exécution d'opérations élémentaires en fonctions d'instructions délivrées par une mémoire de commande et relatives aux opérations arithmétiques à effectuer, caractérisé en ce qu'il comporte :

13

# 0 018 298

— au moins un registre (112) à n + 1 positions de mantisse de valeur moyenne d'opérande et un registre correspondant (116) d'exposant de valeur moyenne d'opérande,

— au moins un registre (121, 122) de mantisse d'information d'erreur d'opérande et un registre correspondant (123, 124) d'exposant d'information d'erreur d'opérande,

— des moyens de calcul reliés auxdits registres de mantisse et d'exposant pour fournir notamment les mantisses et exposants de la valeur moyenne et de l'information d'erreur de la mantisse du résultat de chaque opération arithmétique effectuée sur un ou plusieurs opérandes, .

— ledit organe de contrôle (3) étant relié auxdits registres et moyens de calcul pour commander l'exécution de chaque opération élémentaire d'une opération arithmétique et pour commander le calcul du nombre de chiffres exacts dans la mantisse du résultat final obtenu.

8. Dispositif selon la revendication 7, caractérisé en ce que le dispositif de calcul comporte au moins un registre (114) de mantisse de valeur moyenne de résultat en double longueur à (2n + 2) positions, la mantisse de valeur moyenne de résultat étant prélevée dans ce registre par arrondi ou troncature de n + 1 positions de poids le plus faible.

9. Dispositif selon la revendication 8, caractérisé en ce que l'information d'erreur associée à la valeur moyenne est la variance et des moyens (127) sont prévus pour élever au carré la partie tronquée ou le complément par rapport à la base de la partie tronquée du contenu du registre (114) de mantisse de valeur moyenne de résultat de manière à mettre à jour la variance associée à la mantisse prélevée.

10. Dispositif selon l'une quelconque des revendications 8 et 9, caractérisé en ce que la position de poids le plus faible de la partie basse (RRB) du registre (114) de mantisse de valeur moyenne de résultat est rebouclée sur elle-même ($\alpha$).

## Claims

1. Method of obtaining the final result of a calculation performed upon digital data having a floating point representation on base b in a digital computer device from at least one initial digital piece of data and comprising one or more arithmetical operations which have to be performed in order to arrive at the final result, characterized in that a control member :

a) automatically associates with the or each piece of initial data (A, B) a mean value having a floating point representation with mantissa (MA, MB) of length n + 1 and exponent (EA, EB) and an item of error information also having a floating point representation with mantissa (VA, BB) and exponent (EVA, EVB), the said mantissa of mean value being the real value or a value approaching that of the mantissa of the piece of initial data, and said associated item of error information being or not being nil depending on whether or not the real value of the piece of initial data and its digital value with floating point representation of length n coincide ;

b) automatically performs the first arithmetical operation on one or more first pieces of initial data by calculating jointly :

— on the one hand, a mean value of result supplied with a floating point representation, and with mantissa (MR) and exponent (ER) and obtained by performing said first operation on the mean value or values of the piece or pieces of initial data, and

— on the other hand, an item of error information associated to the mean value of result, supplied with a floating point representation and with mantissa (VR) and exponent (EVR) and obtained from the or each item of error information and, if necessary, from the or each mean value of the piece or pieces of initial data, in relation to the nature of the performed arithmetical operations ;

c) performs in the same way the or each other arithmetical operation, which may be required upon at least one piece of initial data or one already obtained result, until a mean value and an item of error information of the final result are obtained, and

d) determines the number (C) of exact significant figures in the mean value of the final result from said mean value and from the associated piece of error information.

2. Method according to claim 1, in which the mantissae of the pieces of initial data are truncated in the case where they cannot be exactly transcribed into a digital representation of length n, characterized in that the control member

— associates to each piece of initial data an item of truncated information (T) having a first or second state depending on whether or not the mantissa of said item to information is truncated, and

— when the truncation information (T) associated to a piece of initial information is in its first state, to said piece of initial information is in its first state, to said piece of initial information are associated, on the one hand, a mantissa of mean value and of length n + 1 obtained by completing the mantissa of the truncated piece of initial information of length n with the introduction of the value $1/2 \cdot b$ in the (n + 1) th position, and, on the other hand, an item of error information constituted by the variance $1/4\, b^{-2n}$ or the standard deviation $1/2 \cdot b^{-n}$.

3. Method according to claim 1, in which the mantissae of the pieces of initial data are rounded off whenever they cannot be exactly transcribed into a digital representation of length n, characterized in that the control member :

— automatically associates to each piece of initial data due to be rounded off, on the one hand, a

14

**0 018 298**

mantissa of mean value of length n + 1 whose value is closest to that of the mantissa of the piece of initial data and on the other hand, an item of error information estimated from the value of the truncated part of the mantissa of the piece of initial data or from the value of the complement thereof, depending on the rounding-off sense.

4. Method according to any one of claims 1 to 3, characterized in that, when during an operation of normalization or de-normalization of a mantissa of mean value, the exponent is decremented or incremented of said mean value of a number of steps which is a function of the number of shifts of the mantissa, the exponent of the associated item of error information is decremented or incremented of a double number of steps when the error information is the variance and of the same number of steps when the error information is the standard deviation.

5. Method according to any one of claims 1 to 4, characterized in that, for each truncation or rounding-off of a mantissa of mean value, the associated item of error information is updated by using, in the case of truncation, the truncated part of the mantissa and, in the case of rounding-off, said truncated part or its complement, depending on the rounding-off sense.

6. Method according to any one of claims 1 to 5, characterized in that the control member automatically associates to each operand used, a binary information having a first or second state depending on whether said operand is a piece of initial data or has already undergone at least one arithmetical process.

7. Device for carrying out the method according to any one of claims 1 to 6, comprising at least one computer unit, at least one register for the exponent of an operand and one register for the mantissa of an operand, a local memory and a control member for emitting signal controlling the execution of elementary operations as a function of instructions delivered by a control memory and relative to the arithmetical operations to be effected, characterized in that it comprises :
— at least one first mantissa register (112) having n + 1 positions for a mantissa of mean value of operand and a corresponding register (116) for an exponent of mean value of operand,
— at least one mantissa register (121, 122) for the mantissa of an item of operand error information, and a corresponding register (123, 124) for the exponent of the operand error information,
— means connected to said mantissa and exponent registers, for calculating for example the mantissae and exponents of the mean value and of the piece of error information of the mantissa of the result of each arithmetical operation performed on one or more operands,
— said control member (3) being connected to said registers and calculating means to control the execution of each elementary operation of an arithmetical operation and to control the calculation of the number of exact figures in the mantissa of the obtained final result.

8. Device according to claim 7, characterized in that the calculating device comprises at least one register (114) of mantissa of mean value of the result in double length in (2n+2) positions, the mantissa of mean value of the result being taken from that register by rounding-off or truncation of n + 1 positions of lower significance.

9. Device according to claim 8, characterized in that the item of error information associated to the means value is the variance and means (127) are provided to raise to the second power the truncated part or the complement with respect to the base of the truncated part of the contents of the register (114) of mantissa of mean value of the result so as to bring up to date the variance associated to the mantissa which has been taken off.

10. Device according to any one of claims 8 and 9, characterized in that the position of lowest significance in the low portion (RRB) of the register (114) of mantissa of mean value of the result is looped back on itself ($\alpha$).

**Ansprüche**

1. Verfahren zum Ermitteln des Endresultats eines Rechenvorganges anhand von numerischen Angaben in Gleitkommadarstellung in Basis b einer numerischen Recheneinrichtung, ausgehend von zumindest einer numerischen Initialangabe, bei welchem Verfahren eine oder mehrere arithmetische Operationen durchgeführt werden müssen, um zum Endresultat zu gelangen, dadurch gekennzeichnet, daß ein Steuerorgan :

a) automatisch der bzw. jeder Initialangabe (A, B) einen Mittelwert in Gleitkommadarstellung mit Mantisse (MA, MB) im Format n + 1 und Exponenten (EA, EB) und eine Fehlerinformation, ebenfalls in Gleitkommadarstellung mit Mantisse (VA, VB) und Exponenten (EVA, EVB), zuordnet, wobei die Mittelwertmantisse der Realwert oder ein Annäherungswert der Mantisse der Initialangabe ist und die zugehörige Fehlerinformation Null oder nicht Null ist, je nachdem, ob der Realwert der Initialangabe und ihr numerischer Wert in Gleitkommadarstellung im Format n übereinstimmen oder nicht ;

b) automatisch die erste arithmetische, anhand von einer oder mehreren ersten Initialangabe(n) durchzuführende Operation ausführt, unter gleichzeitiger Berechnung von :
— einerseits einem in Gleitkommadarstellung mit Mantisse (MR) und Exponent (ER) erbrachten und durch Ausführung der ersten Operation anhand des bzw. der Mittelwerte(s) der Initialangabe(n) erhaltenen Resultat-Mittelwert und

— anderseits einer dem Resultat-Mittelwert zugeordneten, in Gleitkommadarstellung mit Mantisse (VR) und Exponenten (EVR) erbrachten und ausgehend von der bzw. jeder Fehlerinformation und gegebenenfalls dem bzw. jedem Mittelwert der Initialangabe(n) erhaltenen Fehlerinformation als Funktion der Beschaffenheit der durchgeführten arithmetischen Operation ;

c) auf ähnliche Weise die bzw. jede andere mögliche anhand von zumindest einer Initialangabe oder eines vorher erhaltenen Ergebnisses durchzuführende arithmetische Operation bis zur Erzielung eines Endresultat-Mittelwerts und einer Endresultat-Fehlerinformation ausführt und

d) die Anzahl (C) an exakten signifikanten Ziffern im Endresultat-Mittelwert, ausgehend von diesem Mittelwert und der zugehörigen Fehlerinformation, bestimmt.

2. Verfahren nach Anspruch 1, bei welchem die Mantissen der Initialangaben abgebrochen werden, wenn sie nicht exakt in numerischer Darstellung im Format n gespeichert werden können, dadurch gekennzeichnet, daß das Steuerorgan :

— jeder Initialangabe eine Abbrechinformation (T) mit primärem oder sekundärem Status, je nachdem, ob die Mantisse dieser Angabe abgebrochen ist oder nicht, zuordnet und,

— wenn die einer Initialangabe zugeordnete Abbrechinformation (T) in ihrem primären Status ist, dieser Angabe einerseits eine durch Ergänzung der Mantisse der abgebrochenen Initialangabe im Format n durch Einführung des Wertes $1/2 \cdot b$ in der Position $(n + 1)^e$ erhaltene Mantisse des Mittelwerts des Formates $n + 1$ und anderseits eine aus der Varianz $1/4 \cdot b^{-2n}$ oder Standardabweichung $1/2 \cdot b^{-n}$ bestehende Fehlerinformation zuordnet.

3. Verfahren nach Anspruch 1, bei welchem die Mantissen der Initialangaben gerundet werden, wenn sie nicht exakt in numerischer Darstellung im Format n gespeichert werden können, dadurch gekennzeichnet, daß das Steuerorgan

— automatisch jeder zu rundenden Initialangabe einerseits eine Mantisse des Mittelwertes vom Format $n + 1$, deren Wert an jenen der Mantisse der Initialangabe am nächsten herankommt, und anderseits eine ausgehend vom Wert des abgebrochenen Teiles der Mantisse der Initialangabe oder vom Komplementärwert dieses abgebrochenen Teiles errechnete Fehlerinformation im Sinne des Rundens zuordnet.

4. Verfahren nach einem der Ansprüche 1 bis 3, dadurch gekennzeichnet, daß, wenn im Verlauf einer Normalisierungs- oder Entnormalisierungsoperation einer Mantisse des Mittelwertes der Exponent dieses Mittelwertes um eine Anzahl von Schritten als Funktion der Anzahl an Verschiebungen der Mantisse verringert oder erweitert wird, der Exponent der zugehörigen Fehlerinformation um eine doppelte Anzahl an Schritten verringert oder erweitert wird, wenn die Fehlerinformation die Varianz ist, und um dieselbe Anzahl an Schritten, wenn die Fehlerinformation die Standardabweichung ist.

5. Verfahren nach einem der Ansprüche 1 bis 4, dadurch gekennzeichnet, daß für jedes Abbrechen oder Runden einer Mantisse des Mittelwertes die zugehörige Fehlerinformation aktualisiert wird, wobei im Fall des Abbrechens der abgebrochene Teil der Mantisse und im Fall des Rundens dieser abgebrochene Teil oder sein Komplement im Sinne des Rundens verwendet wird.

6. Verfahren nach einem der Ansprüche 1 bis 5, dadurch gekennzeichnet, daß das Steuerorgan automatisch jedem verwendeten Operanden eine binäre Information mit einem primären und einem sekundären Status zuordnet, je nachdem, ob dieser Operand eine numerische Initialangabe ist oder bereits zumindest einer arithmetischen Behandlung unterzogen worden ist.

7. Vorrichtung zur Durchführung des Verfahrens nach einem der Ansprüche 1 bis 6, mit zumindest einer Rechneinheit, zumindest einem Exponentenregister für den Operanden und einem Mantissenregister für den Operanden, einem lokalen Speicher und einem Steuerorgan zum Emittieren von Signalen, welche die Durchführung von elementaren Operationen als Funktionen von einem Steuerspeicher gegebener Befehle, betreffend die durchzuführenden arithmetischen Operationen steuern, dadurch gekennzeichnet, daß sie folgendes umfaßt :

— zumindest ein Register (112) mit $n + 1$ Positionen für die Mantisse des Operanden-Mittelwertes und ein korrespondierendes Register (116) für den Exponenten des Operanden-Mittelwertes,

— zumindest ein Register (121, 122) für die Mantisse der Operanden-Fehlerinformation und ein korrespondierendes Register (123, 124) für den Exponenten der Operanden-Fehlerinformation,

— mit den Mantissen- und Exponentenregistern verbundene Rechenmittel zur Erstellung insbesondere der Mantissen und Exponenten des Mittelwertes und der Fehlerinformation der Mantisse des Resultats jeder anhand von einem oder mehreren Operanden durchgeführten arithmetischen Operation,

— wobei das Steuerorgan (3) zum Steuern der Durchführung jeder elementaren Operation einer arithmetischen Operation und zum Steuern der Berechnung der Anzahl an exakten Ziffern in der Mantisse des erhaltenen Endresultates mit den Registern und den Rechenmitteln verbunden ist.

8. Vorrichtung nach Anspruch 7, dadurch gekennzeichnet, daß die Recheneinrichtung zumindest ein Register (114) für die Mantisse des Resultat-Mittelwertes von doppelter Länge mit $(2n + 2)$ Positionen umfaßt, wobei die Mantisse des Resultat-Mittelwertes diesem Register durch Runden oder Abbrechen von $n + 1$ Positionen geringsten Stellenwertes entnommen ist.

9. Vorrichtung nach Anspruch 8, dadurch gekennzeichnet, daß die dem Mittelwert zugehörige Fehlerinformation die Varianz ist und Mittel (127) zum Quadrieren des abgebrochenen Teiles oder des Komplements bezüglich der Basis des abgebrochenen Teiles des Inhaltes des Registers (114) der Mantisse des Resultat-Mittelwertes zur Aktualisierung der der entnommenen Mantisse zugehörigen Varianz vorgesehen sind.

10. Vorrichtung nach einem der Ansprüche 8 und 9, dadurch gekennzeichnet, daß die Position des geringsten Stellenwertes des unteren Teiles (RRB) des Registers (114) der Mantisse des Resultat-Mittelwertes auf sich selbst wieder zur Schleife geschaltet wird ($\alpha$).

**FIG.1**

**FIG.6**

0 018 298

# FIG.2

# FIG. 3

# FIG.4

FIG.5

Log (2n + 2)

RNCR

Valeur arrondie
en entier

$\begin{smallmatrix}Log\\6\end{smallmatrix}$ ~ 154

RVR2       REVR2

X ~ 153

RVR1

√‾ ~ 151

RVR       REVR       INV ~ 152

VA
EVA
VB
EVB
MA
EA
MB
EB

EVR
MR
VR
NCR
ER

# FIG.7A

$MB \rightarrow 112 \quad EB \rightarrow 116$

$EA - EB = K$

(a) $k<0$ — $K?0$ — $k>0$ (b)

$k=0$ (c)

$MA \rightarrow (RRH, RRB)$

$MB \rightarrow (RRH, RRB)$

$|K|$ décalages à droite de MA dans (RRH, RRB)

$K$ décalages à droite de MB dans (RRH, RRB)

$EA + |k| = EA$

$EB + k = EB$

$MA \pm MB \rightarrow (C2, RRH, RRB)$ ; $EA$ ou $EB \rightarrow ER$

non | oui — $C2=1?$ — (b')

(a')

décalage à droite d'un pas de (C2, RRH, RRB; ER+1→ER)

Fig. 7B

---

$VB \rightarrow \quad EVB \rightarrow 123$

$VA \rightarrow 122 \quad EVA \rightarrow 124$

(a) — (b)

(c)

$2|k|$ décrémentations de EVA dans 124

$2k$ décrémentations de EVB dans 123

$EVA - EVB = K'$

$k'<0$ — $K'?0$ — $k'>0$

$k'=0$

$|k'|$ décalages à droite de VA dans RVA

$k'$ décalages à droite de VB dans RVB

$VA + VB \rightarrow (C3, R3)$ ; $EA$ ou $EB \rightarrow RE3$

non — $C3=1$ — oui

Décalage à droite d'un pas de (C3,R3) i (RE3+1→(RE3)

(a') — (b')

$(RE3)+2 \rightarrow RE3$

Fig. 7B

0 018 298

6

FIG. 7B

0 018 298

$MB \rightarrow 112 \quad EB \rightarrow 116$

Lecture MA, EA et exécution de $MB \times MA \rightarrow (RRH, RRB)$ et $EA+EB=ER$

**FIG.8**

Normalisation de (RRH, RRB) en 3 décalages à gauche et $ER-3 = ER$

(a") oui    non (b")

$(RRB)=0$

Transfert (RRB)

---

$VB \rightarrow 121 \quad EVR \rightarrow 123$
$VA \rightarrow 122 \quad EVA \rightarrow 124$

$MA \times MA \rightarrow RTA1 \quad 0 \rightarrow REA1$
$MB \times MB \rightarrow RTB1 \quad 0 \rightarrow REB1$

Normalisation de $MA \times MA$ dans $RTA1$ et mise à jour $(REA1)$
Normalisation de $MB \times MB$ dans $RTB1$ et mise à jour $(REB1)$

$(RTA1) \times VB \rightarrow (RTA2)$
$(REA1) + EVB \rightarrow (REA2)$
et normalisation de $(RTA2)$ avec mise à jour de $(REA2)$

$(RTB1 \times VA \rightarrow (RTB2)$
$(REB1) + EVA \rightarrow (REB2)$
et normalisation de $(RTB2)$ avec mise à jour de $(REB2)$

Addition flottante de :
$(RTA2, REA2)$ et $(RTB2, REB2)$
$\rightarrow (C3, R3, RE3)$
Normalisation de $(C3, R3)$ et mise à jour de $RE3)$

$(RE3)+2_3=(RE3)$

(a")      (b")